# EUROPEAN PATENT APPLICATION

(11) **EP 3 396 689 A1**
(43) Date of publication of application: **31.10.2018**
(21) Application number: 18169266.6
(22) Date of filing: 25.04.2018
(51) Int. Cl.: H01F 38/14, H01F 3/10, H01F 27/34

(54) **MAGNETIC PART**

(30) Priority: 28.04.2017 JP 2017089925
(71) Applicant: Kojima Industries Corporation, Toyota-shi, Aichi 471-0875 (JP); TOYOTA JIDOSHA KABUSHIKI KAISHA, Toyota-shi, Aichi 471-8571 (JP)
(72) Inventor: NAKANE, Syunsuke, Toyota-shi, Aichi (JP); KURAMOTO, Kimitaka, Toyota-shi, Aichi (JP); TABATA, Takanobu, Toyota-shi, Aichi (JP); HIGASHIYAMA, Arinori, Toyota-shi, Aichi (JP); YUASA, Hiroaki, Toyota-shi, Aichi 471-8571 (JP); TSUNEKAWA, Chiemi, Nagoya-shi, Aichi (JP)
(74) Representative: Wunderlich & Heim Patentanwälte Partnerschaftsgesellschaft mbB

(57) **Abstract**

A magnetic part used with a non-contact power transmitting/receiving coil has an appropriate shape and size and decreases power loss of the magnetic part. A power transmitting/receiving coil unit includes four flat magnetic bodies 24 disposed over a power transmitting coil 18 that is flatly wound in a rectangular shape. The magnetic bodies 24 are disposed at vertices of the power transmitting coil 18. Each magnetic body 24 includes a pair of magnetic pieces 14, with the magnetic pieces 14 being disposed symmetrically about an imaginary line extending from the center toward the vertex of the power transmitting coil 18 and expanding from the inside to outside of the power transmitting coil 18.

## Description

### CROSS REFERENCE TO RELATED APPLICATION

The disclosure of Japanese Patent Application No. 2017-089925 filed on April 28, 2017, including the specification, claims, drawings, and abstract, is incorporated herein by reference in its entirety.

### TECHNICAL FIELD

The present invention relates to magnetic parts for vehicles and, in particular, to a magnetic part used with a non-contact power transmitting coil.

### BACKGROUND

Electric vehicles, such as electric cars with external charging devices mounted thereon, or hybrid vehicles, have come into wide use. The external charging devices that have been put into practical use receive power from a commercial power source via electrical outlets. Other examples of the external charging devices that have been proposed for non-contact charging are those that charge electricity from power supply units provided at, for example, general households, or parking lots or service stations of community facilities and amusement facilities.

As disclosed in PATENT DOCUMENT 1, a power supplying device for non-contact charging includes a power transmitting coil that generates a magnetoelectric field for power transmission. An electric vehicle includes a power receiving coil that receives the electromagnetic field for power transmission. Power transmission is enabled by resonance between the circuit on the power transmitting coil side and the circuit on the power receiving coil side.

### CITATION LIST

### PATENT LITERATURE

PATENT DOCUMENT 1: WO2010/074106

### SUMMARY

### TECHNICAL PROBLEM

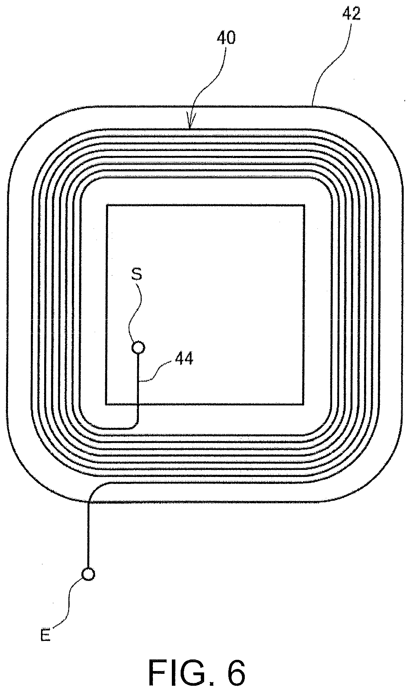

The power transmitting coil and the power receiving coil, both for non-contact charging, (these coils will hereinafter be collectively referred to as a non-contact power transmitting/receiving coil hereinafter) include a conductive wire that is wound flatly. FIG. 6 illustrates an example of a non-contact power transmitting/receiving coil 40 formed by winding a conductive wire 44 in a rectangular shape. The conductive wire 44 starts looping from an internal end S until it finishes at the external other end E by being wound one pitch outward every time a single winding of the conductive wire 44 is finished. The conductive wire 44 is wound around a rectangular region having a void in the center of the region. A magnetic plate 42 is disposed opposite to the region where the conductive wire 44 is wound for decreasing leakage of the magnetic flux and increasing the transmission power. FIG. 6 schematically illustrates the non-contact power transmitting/receiving coil 40 disposed directly over the magnetic plate 42, but the non-contact power transmitting/receiving coil 40 is, in practice, often fixed on a bobbin which is made of an insulator such as plastic resin and is disposed over the magnetic plate 42 via the bobbin.

Various sizes and shapes of the magnetic plate have been manufactured, but the manufacture is sometimes difficult depending on the shape or size of the non-contact power transmitting/receiving coil, and perhaps causes an increase of the manufacturing cost. To solve this problem, the magnetic plate may be formed to a desired shape and size by combining small pieces of a magnetic body, but in this case a gap is formed between the pieces of the magnetic body and causes power loss.

An object of the present disclosure is to achieve an appropriate shape and size of a magnetic part used with a non-contact power transmitting/receiving coil, and decrease power loss of the magnetic part.

### SOLUTION TO PROBLEM

The present disclosure provides a magnetic part for a vehicle, including a plurality of flat magnetic bodies disposed over a non-contact power transmitting/receiving coil that is flatly wound, in which the magnetic bodies are disposed over the non-contact power transmitting/receiving coil at a plurality of positions along a winding direction of the non-contact power transmitting/receiving coil, and the magnetic bodies each expand from the inside to the outside of the non-contact power transmitting/receiving coil.

Preferably, the magnetic bodies each include a pair of magnetic pieces, with the magnetic pieces disposed symmetrically about an imaginary line extending outward from the inside of the non-contact power transmitting/receiving coil.

Preferably, the non-contact power transmitting/receiving coil is wound in a polygonal shape, and includes a pair of magnetic pieces, with the magnetic pieces disposed symmetrically about an imaginary line extending toward a vertex of the polygonal shape from the inside of the non-contact power transmitting coil.

### ADVANTAGEOUS EFFECTS OF INVENTION

The present disclosure can achieve an appropriate shape and size of the magnetic part used with the non-contact power transmitting/receiving coil, and decrease power loss of the magnetic part.

### BRIEF DESCRIPTION OF DRAWINGS

An embodiment of the present disclosure will be described by reference to the following figures, wherein:
FIG. 1 is an exploded schematic view of a power transmitting coil unit;
FIG. 2 is a plan view of four pairs of magnetic pieces;
FIG. 3A illustrates an example step for deriving the magnetic pieces;
FIG. 3B illustrates an example step for deriving the magnetic pieces;
FIG. 3C illustrates an example step for deriving the magnetic pieces;
FIG. 3D illustrates an example step for deriving the magnetic pieces;
FIG. 4 illustrates the power transmitting coil and the magnetic pieces;
FIG. 5 is a cross-sectional view schematically illustrating a portion where the power transmitting coil is disposed over the magnetic pieces; and
FIG. 6 illustrates an example of a non-contact power transmitting/receiving coil formed by winding a conductive wire rectangularly.

### DESCRIPTION OF EMBODIMENTS

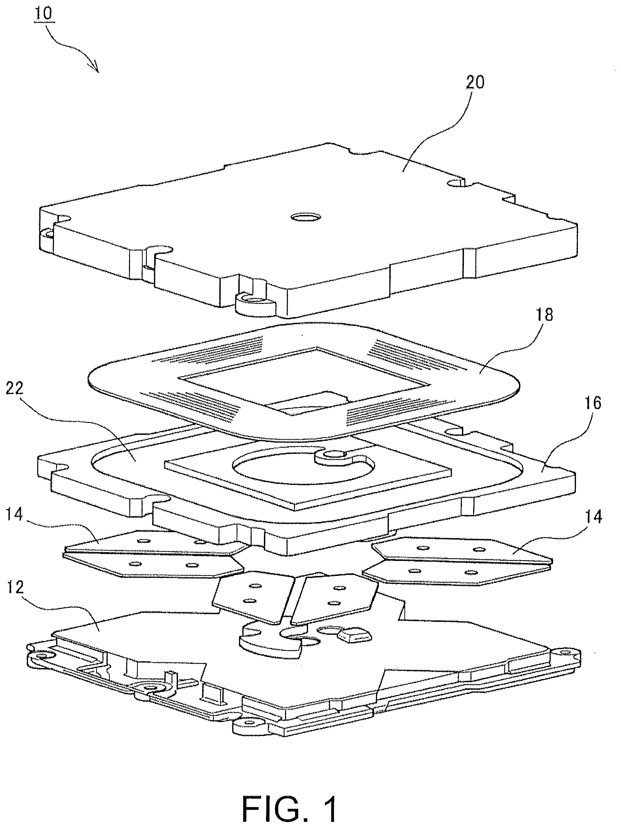

FIG. 1 is an exploded schematic view of a power transmitting coil unit 10 used in a power supply apparatus for non-contact charging. The power transmitting coil unit 10 includes an electric circuit housing 12, magnetic pieces 14, a bobbin 16, a power transmitting coil 18, and a resin cover 20. The bobbin 16 is made of a plastic resin or the like, with its top and bottom surfaces recessed or projecting depending on the necessity. The bobbin 16 includes a coil groove 22 for receiving the power transmitting coil 18 formed by winding a conductive wire into a flat rectangular shape. Thus, the power transmitting coil 18 is accommodated in the coil groove 22 and fixed on the bobbin 16.

The electric circuit housing 12 receives an electric circuit for non-contact charging. A pair of magnetic pieces 14 is fixed at each of the four corners of the upper surface of the electric circuit housing 12. The magnetic pieces 14 are made of ferrite, permalloy, iron, or the like and formed into the flat plate-like shape. By covering the electric circuit housing 12 by the bobbin 16 from above, the magnetic pieces 14 of each pair face each other via the bobbin 16 at the respective corners of the power transmitting coil 18.

The four pairs of magnetic pieces 14 and the electric circuit housing 12 are covered by the bobbin 16 on which the power transmitting coil 18 is fixed, and the bobbin 16 is covered by the resin cover 20 from above. Thus, the power transmitting coil unit 10 is assembled.

The power transmitting coil unit 10 is installed in a parking lot, for example. When the electric vehicle capable of non-contact charging stops over the power transmitting coil unit 10, the power transmitting coil 18 comes to face a power receiving coil mounted on the electric vehicle to enable non-contact charging from the power transmitting coil 18 to the power receiving coil.

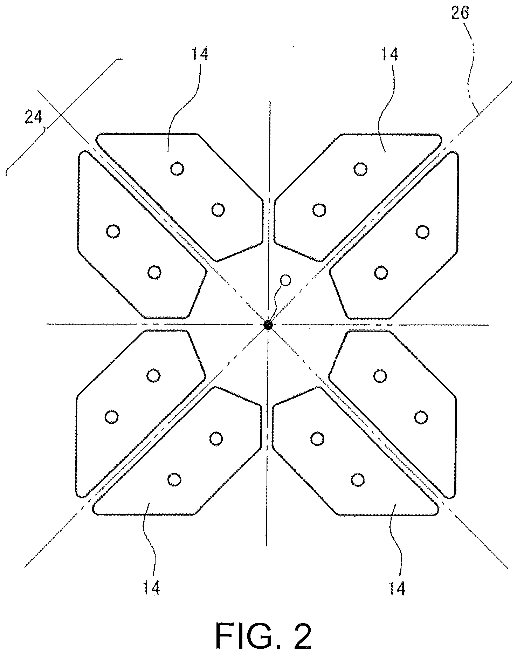

FIG. 2 is a plan view of four pairs of magnetic pieces 14. The four pairs of magnetic pieces 14 are disposed over the power transmitting coil at four positions along the winding direction of the power transmitting coil. Specifically, a pair of magnetic pieces 14 extend toward each corner of the four corners of the transmitting coil from the inside of the transmitting coil, so that each pair of magnetic pieces 14 extends from the inside to the outside of the transmitting coil and spans over the inside and outside of the power transmitting coil. A pair of magnetic pieces 14 forms a magnetic body 24 which is symmetrical about an imaginary line 26 extending from the center O toward the outside. A gap is formed between the pair of magnetic pieces 14 in which the magnetic pieces 14 are disposed symmetrically about the imaginary line 26.

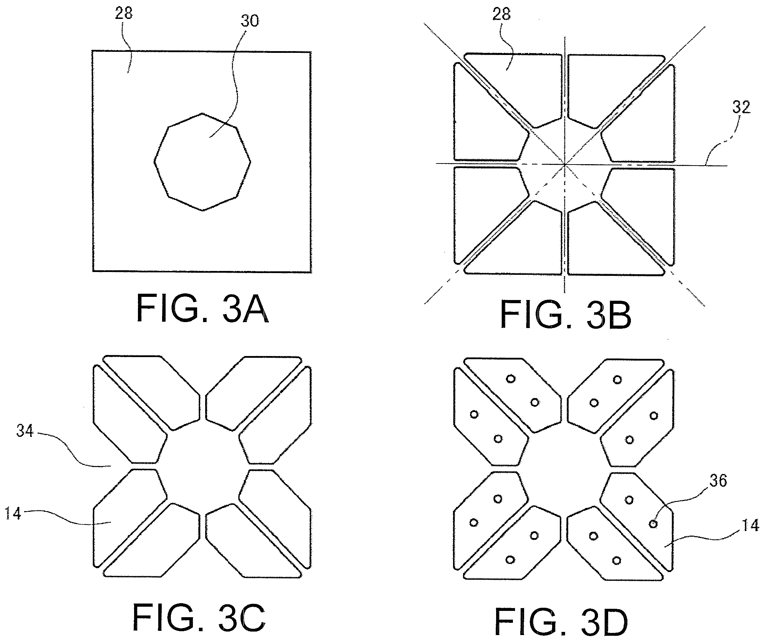

The magnetic pieces 14 are shaped, for example, by the steps illustrated in FIGS. 3A to 3D. Specifically, FIG. 3A is the step of forming an octagonal hole 30 in the center of a rectangular magnetic plate 28, FIG. 3B is the step of dividing the magnetic plate 28 by dividing lines 32 each extending outward from each vertex of the octagonal hole 30, where each diving line 32 extends in a direction equally dividing each vertex, FIG. 3C is the step of forming a notch 34 of an isosceles triangle shape on each side of the magnetic plate 28, and FIG. 3D is the step of forming holes 36 for the production or installation process on each magnetic piece 14.

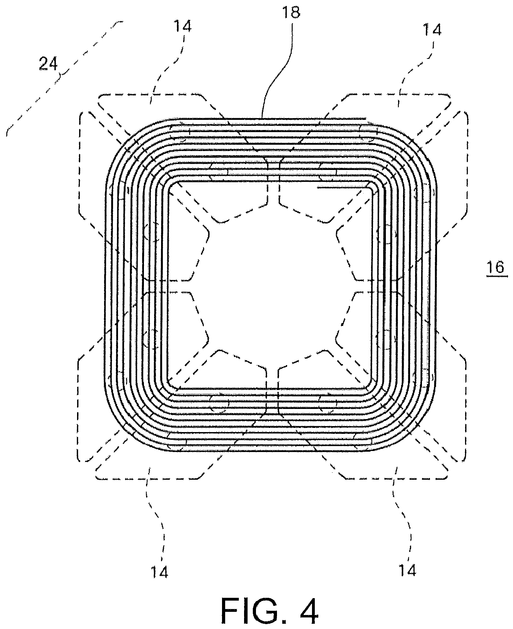

FIG. 4 illustrates the power transmitting coil 18 disposed over the individual magnetic pieces 14. Each magnetic piece 14 is shown by a broken line, as it is covered by the transmitting coil 18 via the bobbin 16 in FIG. 4.

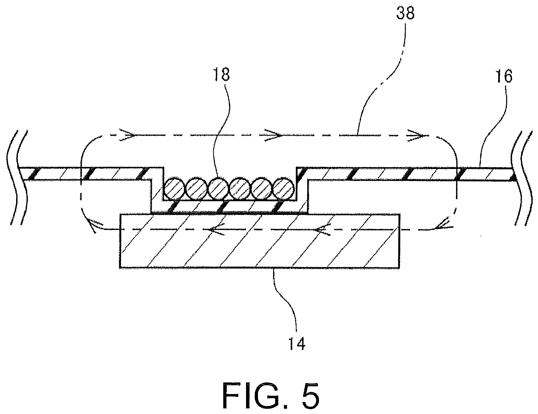

FIG. 5 is a cross-sectional view schematically illustrating a portion where the power transmitting coil 18 overlaps the magnetic pieces 14. A magnetic flux 38 is generated in the vicinity of the transmitting coil 18 to surround the transmitting coil 18, allowing the magnetic flux 38 to pass through a magnetic path formed by the magnetic pieces 14. The magnetic flux is concentrated in the magnetic pieces 14 that have a magnetic permeability greater than that of air.

This structure forms the magnetic path through the magnetic pieces 14 at each of the four corners of the power transmitting coil 18. Usually, the magnetic flux expands more easily in the vicinity of the four corners of the rectangular coil than in straight line sections. Since the magnetic pieces 14 of the present embodiment are disposed at positions corresponding to the four corners in the power transmitting coil unit 10, the magnetic flux is concentrated in the magnetic pieces 14 in the vicinity of the four corners of the power transmitting coil 18. As a result, leakage of the magnetic flux decreases and the transmitting power to the power receiving coil increases.

Meanwhile, the magnetic flux generated around the power transmitting coil 18 is often directed to surround the conductive wire that forms the power transmitting coil 18. This means that few magnetic flux crosses the gap between the magnetic pieces of the pair of the magnetic pieces 14, thereby decreasing the electromagnetic loss due to the gap. In addition, each magnetic piece 14 is small, as the magnetic pieces 14 are disposed only at positions corresponding to the four corners of the transmitting coil 18. Further, the magnetic pieces 14 are identical in shape, as they are formed symmetrically about the gap at the four corners of the transmitting coil 18, so that the number of types of required parts can be reduced.

The power transmitting coil formed by winding the conductive wire rectangularly has been described. Alternatively, the power transmitting coil may be wound in a . different polygonal shape. In that case, the shape of the magnetic pieces can be derived also from similar steps as illustrated in FIGS. 3A to 3D. For example, assume that the power transmitting coil is wound in an equilateral n-angle polygon (where n is an integer not smaller than 3), then the magnetic pieces can be shaped by the following steps of: (i) forming a 2n-polygonal hole in the center of the magnetic plate of an equilateral polygon, (ii) dividing the magnetic plate by divisional lines extending outward from each vertex of the 2n-polygonal hole, (iii) forming a notch in the center part of each side of the magnetic plate, and (iv) forming holes for the production or installation step in each magnetic piece.

Although the magnetic pieces used for the power transmitting coil have been described, the magnetic pieces may also be used for the power receiving coil.

## Claims

1. A magnetic part for a vehicle, comprising:
a plurality of flat magnetic bodies disposed over a non-contact power transmitting/receiving coil that is flatly wound,
the magnetic bodies being disposed over the non-contact power transmitting/receiving coil at a plurality of positions along a winding direction of the non-contact power transmitting/receiving coil, and
the magnetic bodies each expanding from the inside to the outside of the non-contact power transmitting/receiving coil.

2. The magnetic part for a vehicle according to claim 1, wherein
the magnetic bodies each include a pair of magnetic pieces, with the magnetic pieces disposed symmetrically about an imaginary line extending outward from the inside of the non-contact power transmitting/receiving coil.

3. The magnetic part for a vehicle according to claim 1, wherein
the non-contact power transmitting/receiving coil is wound in a polygonal shape, and
each of the magnetic bodies is disposed at a position corresponding to a vertex of the polygonal shape, and includes a pair of magnetic pieces, with the magnetic pieces disposed symmetrically about an imaginary line extending toward the vertex of the polygonal shape from the inside of the non-contact power transmitting/receiving coil.
